# EUROPEAN PATENT SPECIFICATION

(11) **EP 3 695 220 B1**
(45) Date of publication and mention of the grant of the patent: **17.12.2025**
(21) Application number: 18867269.5
(22) Date of filing: 09.10.2018
(51) Int. Cl.: G01N 29/24, G01N 29/04, G01N 29/22

(54) **ULTRASONIC ANGLE BEAM PROBE WITH MECHANICAL LATERAL ADJUSTMENT**
ULTRASCHALLWINKELSTRAHLSONDE MIT MECHANISCHER SEITENVERSTELLUNG
SONDE DE FAISCEAU D'ANGLE ULTRASONORE À RÉGLAGE MÉCANIQUE

(30) Priority: 09.10.2017 US 201762569793 P
(43) Date of publication of application: 19.08.2020
(73) Proprietor: General Electric Company, Schenectady, NY 12345 (US)
(72) Inventor: FISENI, Alexander, 50354 Hurth (DE); HENRIX, Frank, 50354 Hurth (DE); WERNER, Daniel, 50354 Hurth (DE); KRAHE, Joerg, 50354 Hurth (DE)
(74) Representative: Novagraaf Group
(86) International application number: PCT/US2018/055097
(87) International publication number: WO 2019/074984

(56) References cited:
- EP-B1- 1 098 803
- JP-A- 2011 102 724
- US-A- 3 068 370
- US-A1- 2009 165 563
- US-A1- 2011 072 904
- US-A1- 2011 303 013
- US-A1- 2012 006 132
- US-B2- 8 839 673

## Description

### BACKGROUND OF THE INVENTION

Non-destructive testing (NDT) is a class of analytical techniques that can be used to inspect a target, without causing damage, to ensure that the inspected target meets required specifications. For this reason, NDT has found wide acceptance in industries, such as aerospace, power generation, oil and gas transport or refining, and transportation, that employ structures that may not be easily removed from their surroundings.

As an example, global railroad standards can require train wheels to be ultrasonically inspected after manufacture and during maintenance on a regular basis. In ultrasonic testing, acoustic (sound) energy in the form of waves can be directed towards the train wheel. As the ultrasonic waves contact and penetrate the train wheel, they can reflect from features such as outer surfaces and interior defects (e.g., cracks, porosity, etc.). An ultrasonic sensor can acquire ultrasonic measurements of acoustic strength as a function of time. Subsequently, these ultrasonic measurements can be analyzed to provide testing results that characterize defects present within a train wheel, such as their presence or absence, location, and/or size. US2009/165563A1 discloses an ultrasonic water wedge apparatus. JP 2011 102724A discloses an ultrasonic probe tool. US3068370A discloses an ultrasonic probe.

### SUMMARY OF INVENTION

The present invention is defined in the accompanying claims. An inspection system includes a probe assembly comprising a first ultrasonic probe configured to generate an ultrasonic beam. The inspection system includes a probe holder having a through channel and an outer contacting surface. The through channel includes a first region located at a proximal end of the probe holder. The first region is configured to receive a distal end of the probe assembly. The probe assembly is configured to rotate relative to the probe holder about an axis. The outer contacting surface is located at a distal end of the probe holder and is configured to removably couple to a target. The ultrasonic beam generated by the first ultrasonic probe is configured to traverse a target volume in the target based on the rotation of the probe assembly.

### BRIEF DESCRIPTION OF DRAWINGS

These and other features will be more readily understood from the following detailed description taken in conjunction with the accompanying drawings, in which:
FIG. 1 is a schematic illustration of an exemplary inspection system including a rotating ultrasonic sensor;
FIG. 2A is a perspective view of an exemplary probe assembly of the inspection system of FIG. 1;
FIG. 2B is a cross-sectional view of the probe assembly of FIG. 2A;
FIG. 3A is a perspective view of an exemplary probe holder of the inspection system in FIG. 1;
FIG. 3B is a cross-sectional view of the probe holder of FIG. 3A;
FIG. 3C is a bottom-up view of the probe holder of FIG. 3A;
FIG. 4 is a schematic illustration of coupling between the probe assembly and the probe holder;
FIG. 5 is a schematic illustration of an ultrasonic inspection system for detecting defects of a train wheel; and
FIG. 6 is a flowchart of an exemplary method of detecting defects in a target.

It is noted that the drawings are not necessarily to scale. The drawings are intended to depict only typical aspects of the subject matter disclosed herein, and therefore should not be considered as limiting the scope of the disclosure. Those skilled in the art will understand that the systems, devices, and methods specifically described herein and illustrated in the accompanying drawings are non-limiting exemplary embodiments and that the scope of the present invention is defined solely by the claims.

### DETAILED DESCRIPTION

A target (e.g., train wheels) can develop defects, such as cracks, over time during use. If this defect becomes too severe, it can cause the target to break. To avoid target damage (e.g., failure of train wheels during service), the target can be inspected periodically. In some cases, because damage is not visible on the surface of the target, inspection can include ultrasonic testing. In ultrasonic testing, ultrasonic probes can be positioned on the target, and they can send and receive ultrasonic beams (high frequency sound waves) to detect defects beneath the surface of train wheels. In some cases, existing ultrasonic probes can transmit an ultrasonic beam along a fixed direction. This can limit defect detection along the fixed direction. The defects that are not located along the fixed direction can be detected by varying the direction of ultrasonic beam propagation by moving the ultrasonic probe relative to the target. Accordingly, improved ultrasonic testing systems and corresponding methods are provided that can move the ultrasonic probe with respect to the target (by rotating the ultrasonic probe relative to an axis) that results in translation of the ultrasonic beam in the target. As a result, defects located at various locations in the target can be detected.

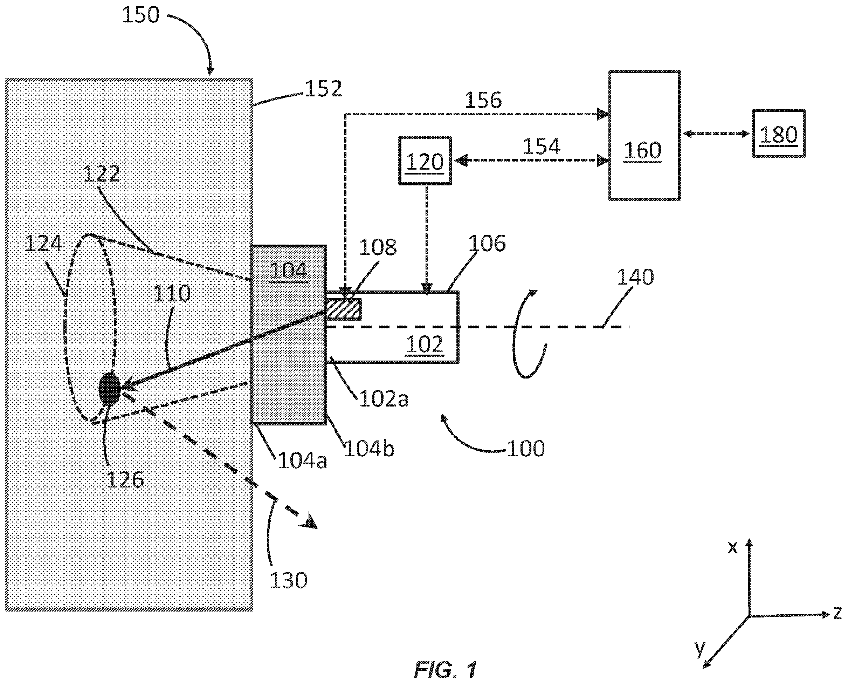

FIG. 1 is a schematic diagram illustrating of an exemplary embodiment of inspection system 100 configured to detect defects in a target 150 (e.g., a train wheel). The inspection system 100 can include a probe assembly 102, a probe holder 104, an actuator 120 and a controller 160. A distal end 104a of the probe holder 104 can couple to the target 150 (e.g., via a contacting surface). A proximal end 104b of the probe holder 104 can rotatably couple to a distal end 102a of the probe assembly 102. The probe assembly 102 can rotate about an axis 140 (e.g., oriented along a z-direction). In some implementations, the axis 140 can be arranged substantially perpendicular to a portion of a target surface 152 of the target 150. The probe holder 104 can be configured to constrain the lateral motion of the axis 140 (e.g., in an x-y plane) relative to the target surface 152.

The probe assembly 102 can include a body housing 106 and an ultrasonic sensor 108 that can be rigidly connected to the body housing 106. The ultrasonic sensor 108 can be configured to generate an ultrasonic beam 110, and can direct the ultrasonic beam 110 into the target 150. For example, the ultrasonic beam 110 can be directed at an oblique direction with respect to the surface 152. Rotation of the probe assembly 102 can be effectuated by an actuator 120. For example, the actuator 120 can be mechanically coupled to the body housing 106 of the probe assembly 102. The actuator 120 can apply a torque to the probe assembly 102 that can result in the rotation of the probe assembly 102 about the axis 140.

Rotation of the probe assembly 102 results in the rotation of the ultrasonic sensor 108 about the axis 140. This causes the ultrasonic beam 110 to traverse through a region 122 in the target 150. The ultrasonic beam 110 is directed at an oblique direction, the region 122 is a cone, and the ultrasonic beam traverses along the surface of the cone. A portion of the ultrasonic beam can trace a path 124 (e.g., circular, elliptical, etc.) in the target 150. As the ultrasonic beam portion travels on the path 124, it can interact with a target volume 126 (e.g., a defect in the target 150). The interaction between the ultrasonic beam portion and the target volume 126 can generate a reflected ultrasonic beam 130 which can be detected by a second ultrasonic sensor (not shown). In some implementations, multiple ultrasonic sensors can be arranged (e.g., surrounding the target 150) to detect reflected ultrasonic beams emanating from regions in the target 150 that interact with the ultrasonic beam 110. For example, reflected ultrasonic beams can be generated by target volumes arranged along the path 124 (e.g., target volumes arranged in a plane).

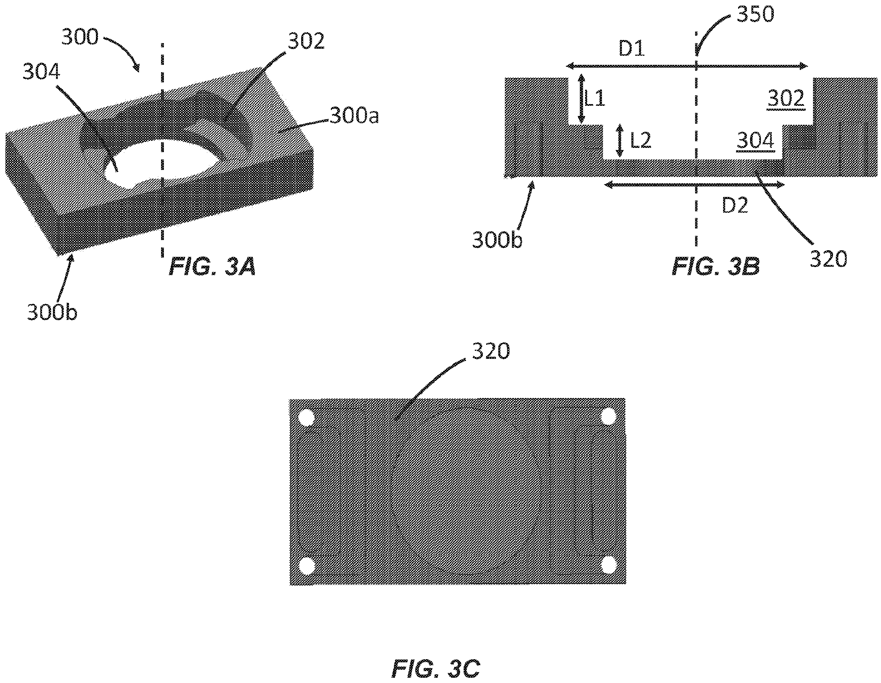

The probe holder 104 can be configured to remain substantially fixed with respect to a reference (e.g., target surface 152, center of a train wheel, etc.). For example, a mechanical probe support (not shown) can prevent the probe holder 102 from moving with respect to the reference. A coupling surface (e.g., see FIG 3C) at the distal end 104a of the probe holder 104 can be arranged on the surface 152 of the target. The coupling surface can be configured to efficiently couple the ultrasonic beam 110 to the target 150. For example, the coupling surface can enclose a portion of a coupling volume in the probe holder 104. The coupling volume can be located between the probe assembly 102 and the target 150. The coupling volume can receive and hold a coupling fluid (e.g., water) that can improve the transmission of ultrasonic beam into the target 150.

The controller 160 can be configured to control the operation of the actuator 120 and the ultrasonic sensor 108. The controller 160 can include one or more processors. The controller 160 can generate and transmit control signals to the ultrasonic sensor 108 and/or actuator 120. For example, an actuator control signal 154 can control the speed of rotation of the actuator 120 and probe assembly 102. The controller 160 can generate and transmit a sensor control signal 156 that can control the operation of the ultrasonic sensor 108 (e.g., temporal duration / intensity of ultrasonic beam 110, time / frequency of generation of ultrasonic beam 110, etc.). In some implementations, the controller 160 can receive signal from the ultrasonic sensor 108 indicative of detection of an ultrasonic beam emanating from the target 150. In some implementations, the controller 160 can be coupled to a storage device 180 that can store operating parameters (e.g., predetermined operating parameters) of the inspection system 100. For example, the controller 160 can generate control signals 154, 156 based on predetermined operating parameters (e.g., angular velocity of actuator 120, ultrasonic sensor parameters, etc.). In some implementations, the controller 160 can be configured to direct the ultrasonic beam to a predetermined target region in the target 150. For example, the speed of rotation of the actuator 108 and/or the time at which the ultrasonic sensor 108 generates the ultrasonic beam can be determined based on the location of the predetermined target region.

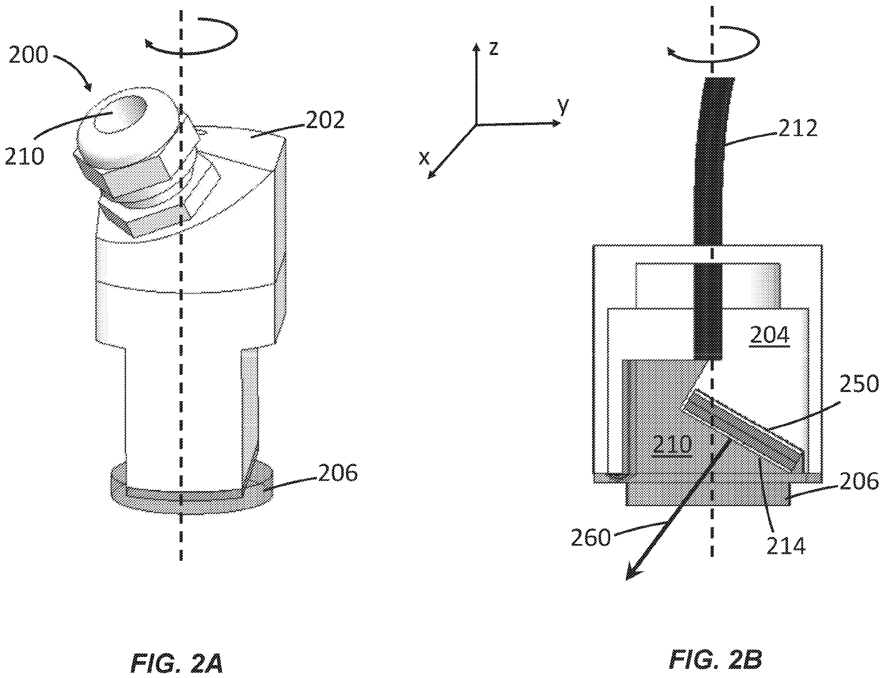

FIG. 2A is a perspective view of an exemplary probe assembly 200 (e.g., probe assembly 102). The probe assembly 200 can include an outer body 202 that can enclose a probe assembly volume 204 (shown in FIG. 2B). The probe assembly 200 can include a coupling disk 206 located at the distal end of the probe assembly 200. The coupling disk 206 can couple with a corresponding coupling region in the probe holder (e.g., probe holder 104). The probe assembly 200 can include an opening 210 to the enclosed volume 204.

FIG. 2B is a cross-section of the probe assembly 200. As illustrated in FIG. 2B, the enclosed volume 204 can include a platform 210 that can support an ultrasonic sensor 250 (e.g., ultrasonic sensor 108). In some implementations, the platform 210 can include a surface 214 that can be oriented at an inclination angle (e.g., 30 45, 60, 75 degrees) relative of the plane of the coupling disk 206 (e.g., x-y plane). The ultrasonic sensor 250 can be located on the surface 214 and can be oriented at the inclination angle with respect to the plane of the coupling disk 206. The sensor 250 can generate an ultrasonic beam 260. The direction of propagation of the ultrasonic beam 260 can be at an oblique direction with respect to the plane (e.g., x-y plane) of coupling disk 206. In some implementations, the ultrasonic sensor 250 can be a one-dimensional ultrasonic probe that can vary the direction of the ultrasonic beam 260 along a first plane (e.g., x-y plane). In some implementations, the ultrasonic sensor 250 can be a two-dimensional ultrasonic probe that can vary the direction of the ultrasonic beam 260 along both a first plane and a second plane orthogonal to the first plane.

FIG. 3A is a perspective view of an exemplary probe holder 300 (e.g., probe holder 104). The probe holder can include a first region 302 located at the proximal end 300a of the probe holder 300, and a second region 304 located at a distal end 300b of the probe holder 300. The first region can receive a coupling region located at the distal end of the probe assembly (e.g., coupling disk 206 of probe assembly 200). FIG. 3B illustrates a cross-section of the probe holder 300. The first region 302 can have a first length L1 parallel to a longitudinal axis 350 (e.g., axis of rotation of the probe assembly) and a first diameter D1 perpendicular to the longitudinal axis 350. The second region 304 can have a second length L2 parallel to a longitudinal axis 350 (e.g., axis of rotation of the probe assembly) and a second diameter D2 perpendicular to the longitudinal axis 350. The probe holder 300 can include a contacting surface 320 located at the distal end 300b. FIG. 3C is an illustration of of the contacting surface 320. The contacting surface 320 can separate the second region 304 from the target (e.g., target 150). In some implementations, the contacting surface 320 can include ceramics or other abrasion-resistant materials, such as hardened metal, stainless steel, multi material systems or composites. The contacting surface 320 can improve coupling between the probe holder 300 and the target 150 (e.g., coupling with target surface 152). In some implementations, contacting surface 320 can include abrasion-resistant materials that can prolong the life of the probe holder 300, coupling disk 206, etc.

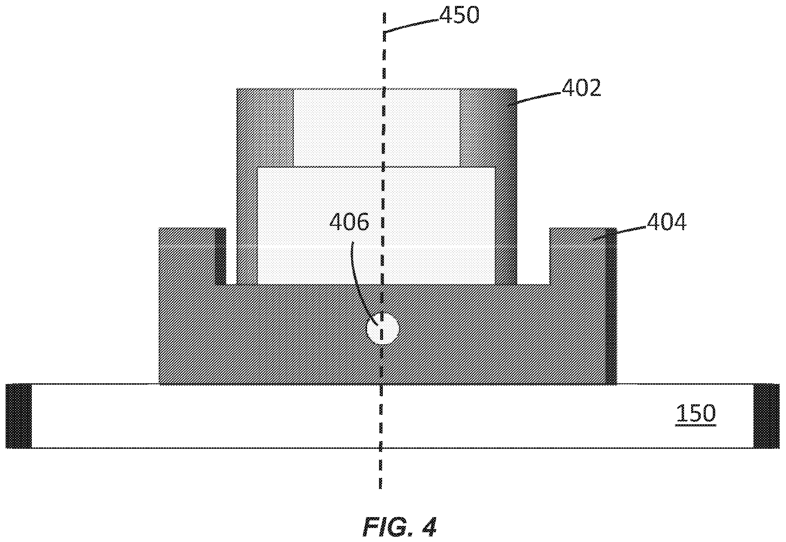

FIG. 4 is a schematic illustration of coupling between an exemplary probe assembly 402 (e.g., probe assembly 102) and an exemplary probe holder 404 (e.g., probe holder 104). The probe holder 404 is located on the target 150 and can include an opening 406 that can allow for coupling fluid to flow in and out from the second region (e.g., second region 305). The probe holder 404 can remain fixed with respect to the target 150. The probe assembly 402 can rotate about the axis 450.

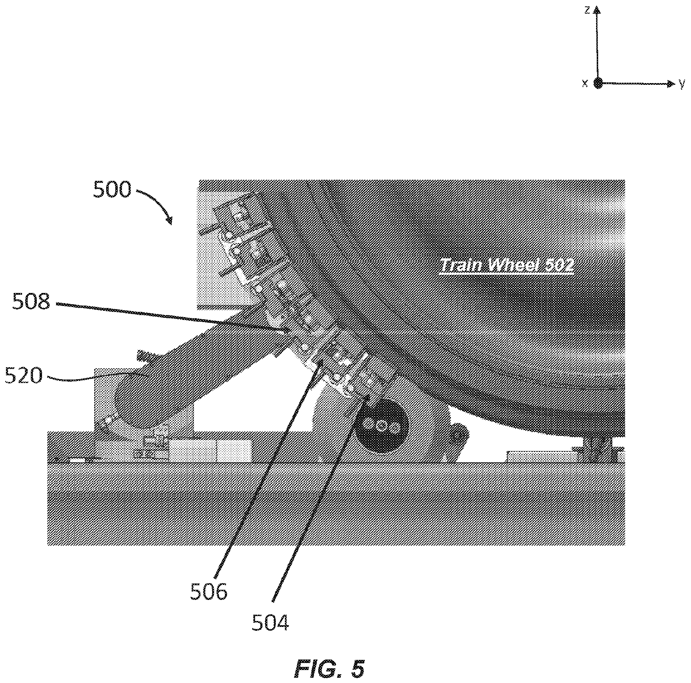

FIG. 5 is a schematic illustration of an ultrasonic inspection device 500 for detecting defects of a train wheel 502. The ultrasonic inspection device 500 can include multiple inspection systems 504, 506 and 508. The inspection systems 504-508 can operate like the inspection system 100. In one implementation, the inspection system 504 can generate a rotating ultrasonic beam that can interacts with various regions of the wheel 502. Ultrasonic beams reflected by various regions of the wheel 502 can be detected by inspection systems of the ultrasonic inspection device 500 (e.g., inspection system 506, 508, etc.). The inspection device 500 can be mounted on a device holder 520.

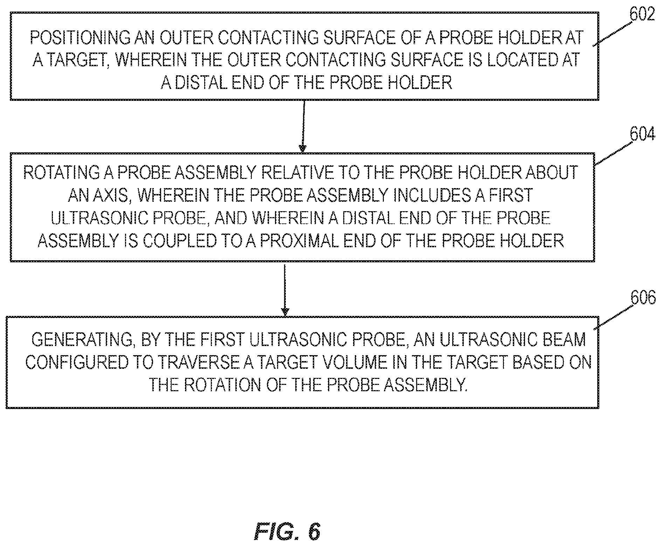

FIG. 6 is a flowchart of an exemplary method of detecting defects in a target. At 602, an outer contacting surface of a probe holder is positioned at a target. For example, outer contacting surface 320 can be positioned on the surface of a target (e.g., target surface 152). The outer contacting surface 320 can be located at a distal end of the probe holder (e.g., distal end 104a of probe holder 104).

At 604, a probe assembly (e.g., probe assembly 102) is rotated relative to the probe holder (e.g., probe holder 104) about an axis (e.g., axis 140). The probe assembly includes a first ultrasonic probe (e.g., ultrasonic probe 108). A distal end (e.g., distal end 102a) of the probe assembly is coupled to a proximal end (e.g., proximal end 104b) of the probe holder. For example, a coupling region (e.g., coupling disk 206) of the probe assembly (e.g., probe assembly 102) can be coupled to a portion of the probe holder (e.g., first region 302 of probe holder 300).

At 606, an ultrasonic beam (e.g., ultrasonic beam 110) is generated by the first ultrasonic probe (e.g., ultrasonic probe 108). The ultrasonic beam is configured to traverse a target volume in the target based on the rotation of the probe assembly. The ultrasonic beam 110 traverses a target volume (extending across the surface of the cone 122). The target volume can include a defect that can interact with the ultrasonic beam. This interaction can generate a second ultrasonic beam (e.g., reflected ultrasonic beam 130) which can be detected by one or more ultrasonic probes. These ultrasonic probes can transmit a signal to a controller (e.g., controller 160) with data characterizing the detection. Based on the signal, the controller can identify the defect (e.g., size of the defect, location of the defect in the target, etc.)

In some implementations, the probe holder 404 can be coupled to the coupling disk via a cardan / gimbal suspension. The gimbal suspension can include a second probe holder having one or more rotatable degrees of freedom which can be coupled to the opening 406. For example, the second probe holder can be rotatably coupled to an axis (e.g., a bar) that extends through the opening 406. A probe holder with a gimbal suspension can used, for example, when the surface of the target (e.g., target surface 152) is uneven. In some implementations, assembly springs that are oriented vertically to a target surface (e.g., target surface 152) can be coupled to the opening 406. A portion of the weight of the probe holder 404 can be transferred to the target through the assembly springs.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

One skilled in the art will appreciate further features and advantages of the invention based on the above-described embodiments. Accordingly, the present application is not to be limited by what has been particularly shown and described.

Certain exemplary embodiments are described to provide an overall understanding of the principles of the structure, function, manufacture, and use of the systems, devices, and methods dis-closed herein. One or more examples of these embodiments are illustrated in the accompanying drawings. Those skilled in the art will understand that the systems, devices, and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention. Further, in the present disclosure, like-named components of the embodiments generally have similar features, and thus within a particular embodiment each feature of each like-named component is not necessarily fully elaborated upon

The subject matter described herein can be implemented in digital electronic circuitry, or in computer software, firmware, or hardware, including the structural means disclosed in this specification and structural equivalents thereof, or in combinations of them. The subject matter described herein can be implemented as one or more computer program products, such as one or more computer programs tangibly embodied in an information carrier (e.g., in a machine readable storage device), or embodied in a propagated signal, for execution by, or to control the operation of, data processing apparatus (e.g., a programmable processor, a computer, or multiple computers). A computer program (also known as a program, software, software application, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file. A program can be stored in a portion of a file that holds other programs or data, in a single file dedicated to the program in question, or in multiple coordinated files (e.g., files that store one or more modules, sub programs, or portions of code). A computer program can be deployed to be executed on one computer or on multiple computers at one site or distributed across multiple sites and interconnected by a communication network.

The processes and logic flows described in this specification, including the method steps of the subject matter described herein, can be performed by one or more programmable processors executing one or more computer programs to perform functions of the subject matter described here-in by operating on input data and generating output. The processes and logic flows can also be performed by, and apparatus of the subject matter described herein can be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processor of any kind of digital computer. Generally, a processor will receive instructions and data from a read only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. Information carriers suitable for embodying computer program instructions and data include all forms of non volatile memory, including by way of example semiconductor memory devices, (e.g., EPROM, EEPROM, and flash memory devices); magnetic disks, (e.g., internal hard disks or removable disks); magneto optical disks; and optical disks (e.g., CD and DVD disks). The processor and the memory can be supplemented by, or incorporated in, special purpose logic circuitry.

To provide for interaction with a user, the subject matter described herein can be implemented on a computer having a display device, e.g., a CRT (cathode ray tube) or LCD (liquid crystal dis-play) monitor, for displaying information to the user and a keyboard and a pointing device, (e.g., a mouse or a trackball), by which the user can provide input to the computer. Other kinds of de-vices can be used to provide for interaction with a user as well. For example, feedback provided to the user call be any form of sensory feedback, (e.g., visual feedback, auditory feedback, or tactile feedback), and input from the user can be received in any form, including acoustic, speech, or tactile input.

The techniques described herein can be implemented using one or more modules. As used herein, the term "module" refers to computing software, firmware, hardware, and/or various combinations thereof. At a minimum, however, modules are not to be interpreted as software that is not implemented on hardware, firmware, or recorded on a non-tratisitorn, processor readable recordable storage medium (i.e., modules are not software per se). Indeed "module" is to be interpreted to always include at least some physical, non-transitory hardware such as a part of a processor or computer. Two different modules can share the same physical hardware (e.g., two different modules can use the same processor and network interface). The modules described herein can be combined, integrated, separated, and/or duplicated to support various applications. Also, a function described herein as being performed at a particular module can be performed at one or more other modules and/or by one or more other devices instead of or in addition to the function performed at the particular module. Further, the modules can be implemented across multiple devices and/or other components local or remote to one another. Additionally, the modules can be moved from one device and added to another device, and/or can be included in both devices.

The subject matter described herein can be implemented in a computing system that includes a back end component (e.g., a data server), a middleware component (e.g., an application server), or a front end component (e.g., a client computer having a graphical user interface or a web inter-face through which a user can interact with an implementation of the subject matter described herein), or any combination of such back end, middleware, and front end components. The components of the system can be interconnected by any form or medium of digital data communication, e.g., a communication network. Examples of communication networks include a local area network ("LAN") and a wide area network ("WAN"), e.g., the Internet.

## Claims

1. An inspection system (100) to detect defects in a target (150), the inspection system comprising:
a probe assembly (102, 200, 402) comprising a first ultrasonic probe (108) configured to generate an ultrasonic beam; and
a probe holder (104, 300, 404) comprising:
an outer contacting surface (320) located at a distal end of the probe holder (300), the outer contacting surface (320) configured to removably couple to a target (150),
the probe holder (300) having a through channel having a first region (302) located at a proximal end (300a) of the probe holder (300), the first region (302) configured to receive a distal end of the probe assembly (102 200, 402), wherein the probe assembly (102, 200, 402) is configured to rotate relative to the probe holder (300) about an axis (140, 350, 450) perpendicular to the outer contacting surface (320), the rotation of the probe assembly (102, 200, 402) resulting in rotation of the first ultrasonic probe (108) about the axis (140, 350, 450),
wherein the ultrasonic beam generated by the first ultrasonic probe (108) is configured to traverse a target volume (126) in the target (150) based on the rotation of the probe assembly (102, 200, 402), the ultrasonic beam (110) being directed at an oblique direction such that the ultrasonic beam (110) traverses through a conical region (122) in the target (150) with the ultrasonic beam (110) traversing along the surface of the cone,
**characterized in that** the rotation of the probe assembly (102,200,402) allows a 360° rotation of the first ultrasonic probe (108) about the axis (140,350,450).

2. The inspection system of claim 1, further comprising one or more ultrasonic probes (108) configured to receive one or more reflected ultrasonic beams, wherein the one or more reflected ultrasonic beams are generated by interaction between the ultrasonic beam generated by the first ultrasonic probe (108) and one or more target regions located on the target volume traced by the first ultrasonic beam.

3. The inspection system of claim 2, wherein the one or more of target regions include a first target region, a second target region and a third target region located in a target plane in the target.

4. The inspection system of claim 1, wherein the inspection system includes an actuator (120) configured to rotate the probe assembly (102, 200, 402) relative to the probe holder (104, 300, 404).

5. The inspection system of claim 4, further comprising a controller (160) comprising one or more processors and operatively coupled to the actuator (120), the controller (160) configured to transmit a first control signal to the actuator (120), wherein the first control signal indicative of a speed of rotation of the probe assembly (102, 200, 402).

6. The inspection system of claim 5, wherein the controller (160) is operatively coupled to the first ultrasonic probe (108), the controller (160) configured to transmit a second control signal to the ultrasonic probe (108), wherein the second control signal indicative of a time period during which the ultrasonic beam is generated.

7. The inspection system of claim 6, wherein the first control signal and the second control signal are based on a location of a predetermined target region in the target.

8. The inspection system of claim 1, wherein the first ultrasonic probe (108) is arranged on a probe plane oriented at an angle relative to the outer surface.

9. The inspection system of claim 1, wherein the first ultrasonic probe (108) is a one-dimensional ultrasonic probe configured to direct the ultrasonic beam along a first direction.

10. The inspection system of claim 1, wherein the first ultrasonic probe (108) is a two-dimensional ultrasonic probe configured to direct the ultrasonic beam along a first direction and a second direction, wherein the first direction and the second direction are orthogonal.

11. The inspection system of claim 1, wherein the through channel includes a second region (304) located between the first region (302) and the outer contacting surface (320),
wherein the first region (302) has a first length parallel to the axis and a first diameter orthogonal to the axis, and the second region (304) has a second length parallel to the axis and a second diameter orthogonal to the axis, and
wherein the first diameter is larger than the second diameter.

12. The inspection system of claim 11, wherein the second region (304) is configured to receive a fluid, wherein the fluid is configured to couple the ultrasonic beam generated by the first ultrasonic probe (108) with the target.

13. A method comprising:
positioning (602) an outer contacting surface (320) of a probe holder (104, 300, 404) at a target (150), wherein the outer contacting surface (320) is located at a distal end of the probe holder (104, 300, 404);
rotating (604) a probe assembly (102, 200, 402) relative to the probe holder (104, 300, 404) about an axis (140, 350, 450) perpendicular to the outer contacting surface (320), wherein the probe assembly (102, 200, 402) includes a first ultrasonic probe (108), and wherein a distal end of the probe assembly (102, 200, 402) is coupled to a proximal end of the probe holder (104, 300, 404), the rotation of the probe assembly (100, 200, 402) resulting in rotation of the first ultrasonic probe (108) about the axis (140, 350, 450); and
generating (606), by the first ultrasonic probe (108), an ultrasonic beam configured to traverse a target volume in the target (150) based on the rotation of the probe assembly (102, 200, 402), the ultrasonic beam (110) being directed at an oblique direction such that the ultrasonic beam (110) traverses through a conical region (122) in the target (150) with the ultrasonic beam (110) traversing along the surface of the cone,
**characterized in that** the rotation of the probe assembly (102,200,402) allows a 360° rotation of the first ultrasonic probe (108) about the axis (140,350,450).

14. The method of claim 13 wherein, the probe holder (104, 300, 404) includes a through channel including a first region (302) located at the proximal end of the probe holder (104, 300, 404), the first region (302) configured to receive the distal end of the probe assembly (102, 200, 402).

15. The method of claim 13, further comprising:
receiving, by one or more ultrasonic probes (108), one or more ultrasonic beams generated by interaction between the ultrasonic beam generated by the first ultrasonic probe (108) and one or more target regions located on the target volume.

16. The method of claim 13, wherein an actuator (120) is configured to rotate the probe assembly (102, 200, 402) relative to the probe holder (104, 300, 404).

17. The method of claim 16, further comprising:
transmitting, by a controller (160), a first control signal to the actuator (120), wherein the first control signal is indicative of a speed of rotation of the probe assembly (102, 200, 402).

18. The method of claim 17, further comprising:
transmitting, by the controller (160), a second control signal to the ultrasonic probe (108), wherein the second control signal is indicative of a time period during which the ultrasonic beam is generated.

19. The method of claim 13, wherein the first ultrasonic probe (108) is a one-dimensional ultrasonic probe configured to direct the ultrasonic beam along a first direction.

20. The method of claim 13, wherein the first ultrasonic probe (108) is a two-dimensional ultrasonic probe configured to direct the ultrasonic beam along a first direction and a second direction, wherein the first direction and the second direction are orthogonal.

## Patentansprüche

1. Inspektionssystem (100) zum Erkennen von Defekten in einem Ziel (150), das Inspektionssystem umfassend:
eine Sondenanordnung (102, 200, 402), umfassend eine erste Ultraschallsonde (108), die konfiguriert ist, um einen Ultraschallstrahl zu erzeugen; und
einen Sondenhalter (104, 300, 404), umfassend:
eine äußere Kontaktfläche (320), die sich an einem distalen Ende des Sondenhalters (300) befindet, wobei die äußere Kontaktfläche (320) konfiguriert ist, um lösbar mit einem Ziel (150) gekoppelt zu werden,
wobei der Sondenhalter (300) einen Durchgangskanal mit einem ersten Bereich (302) aufweist, der sich an einem proximalen Ende (300a) des Sondenhalters (300) befindet, wobei der erste Bereich (302) konfiguriert ist, um ein distales Ende der Sondenanordnung (102, 200, 402) aufzunehmen, wobei die Sondenanordnung (102, 200, 402) konfiguriert ist, um sich relativ zum Sondenhalter (300) um eine Achse (140, 350, 450) senkrecht zur äußeren Kontaktfläche (320) zu drehen, wobei die Drehung der Sondenanordnung (102, 200, 402) zu einer Drehung der ersten Ultraschallsonde (108) um die Achse (140, 350, 450) führt,
wobei der von der ersten Ultraschallsonde (108) erzeugte Ultraschallstrahl konfiguriert ist, um basierend auf der Drehung der Sondenanordnung (102, 200, 402) ein Zielvolumen (126) im Ziel (150) zu durchqueren, wobei der Ultraschallstrahl (110) derart in eine schräge Richtung gerichtet ist, dass der Ultraschallstrahl (110) durch einen konischen Bereich (122) im Ziel (150) verläuft, wobei der Ultraschallstrahl (110) entlang der Oberfläche des Kegels verläuft,
**dadurch gekennzeichnet, dass** die Drehung der Sondenanordnung (102,200,402) eine 360°-Drehung der ersten Ultraschallsonde (108) um die Achse (140,350,450) ermöglicht.

2. Inspektionssystem nach Anspruch 1, ferner umfassend eine oder mehrere Ultraschallsonden (108), die konfiguriert sind, um einen oder mehrere reflektierte Ultraschallstrahlen zu empfangen, wobei der eine oder die mehreren reflektierten Ultraschallstrahlen durch Wechselwirkung zwischen dem von der ersten Ultraschallsonde (108) erzeugten Ultraschallstrahl und einem oder mehreren Zielbereichen erzeugt werden, die sich auf dem vom ersten Ultraschallstrahl abgetasteten Zielvolumen befinden.

3. Inspektionssystem nach Anspruch 2, wobei der eine oder die mehreren Zielbereiche einen ersten Zielbereich, einen zweiten Zielbereich und einen dritten Zielbereich einschließen, die sich in einer Zielebene im Ziel befinden.

4. Inspektionssystem nach Anspruch 1, wobei das Inspektionssystem einen Aktuator (120) einschließt, der konfiguriert ist, um die Sondenanordnung (102, 200, 402) relativ zum Sondenhalter (104, 300, 404) zu drehen.

5. Inspektionssystem nach Anspruch 4, ferner umfassend eine Steuerung (160), die einen oder mehrere Prozessoren umfasst und betriebsmäßig mit dem Aktuator (120) gekoppelt ist, wobei die Steuerung (160) konfiguriert ist, um ein erstes Steuersignal an den Aktuator (120) zu übertragen, wobei das erste Steuersignal eine Drehgeschwindigkeit der Sondenanordnung (102, 200, 402) angibt.

6. Inspektionssystem nach Anspruch 5, wobei die Steuerung (160) betriebsmäßig mit der ersten Ultraschallsonde (108) gekoppelt ist und die Steuerung (160) konfiguriert ist, um ein zweites Steuersignal an die Ultraschallsonde (108) zu übertragen, wobei das zweite Steuersignal einen Zeitraum angibt, während dessen der Ultraschallstrahl erzeugt wird.

7. Inspektionssystem nach Anspruch 6, wobei das erste Steuersignal und das zweite Steuersignal auf einer Position eines vorbestimmten Zielbereichs im Ziel basieren.

8. Inspektionssystem nach Anspruch 1, wobei die erste Ultraschallsonde (108) auf einer Sondenebene angeordnet ist, die in einem Winkel relativ zur Außenfläche orientiert ist.

9. Inspektionssystem nach Anspruch 1, wobei die erste Ultraschallsonde (108) eine eindimensionale Ultraschallsonde ist, die konfiguriert ist, um den Ultraschallstrahl entlang einer ersten Richtung auszurichten.

10. Inspektionssystem nach Anspruch 1, wobei die erste Ultraschallsonde (108) eine zweidimensionale Ultraschallsonde ist, die konfiguriert ist, um den Ultraschallstrahl entlang einer ersten Richtung und einer zweiten Richtung auszurichten, wobei die erste Richtung und die zweite Richtung orthogonal sind.

11. Inspektionssystem nach Anspruch 1, wobei der Durchgangskanal einen zweiten Bereich (304) einschließt, der sich zwischen dem ersten Bereich (302) und der äußeren Kontaktfläche (320) befindet,
wobei der erste Bereich (302) eine erste Länge parallel zur Achse und einen ersten Durchmesser orthogonal zur Achse aufweist und der zweite Bereich (304) eine zweite Länge parallel zur Achse und einen zweiten Durchmesser orthogonal zur Achse aufweist, und
wobei der erste Durchmesser größer ist als der zweite Durchmesser.

12. Inspektionssystem nach Anspruch 11, wobei der zweite Bereich (304) konfiguriert ist, um ein Fluid aufzunehmen, wobei das Fluid konfiguriert ist, um den von der ersten Ultraschallsonde (108) erzeugten Ultraschallstrahl mit dem Ziel zu koppeln.

13. Verfahren, umfassend:
Positionieren (602) einer äußeren Kontaktfläche (320) eines Sondenhalters (104, 300, 404) an einem Ziel (150), wobei sich die äußere Kontaktfläche (320) an einem distalen Ende des Sondenhalters (104, 300, 404) befindet;
Drehen (604) einer Sondenanordnung (102, 200, 402) relativ zum Sondenhalter (104, 300, 404) um eine Achse (140, 350, 450), die senkrecht zur äußeren Kontaktfläche (320) steht, wobei die Sondenanordnung (102, 200, 402) eine erste Ultraschallsonde (108) einschließt und wobei ein distales Ende der Sondenanordnung (102, 200, 402) mit einem proximalen Ende des Sondenhalters (104, 300, 404) gekoppelt ist, wobei die Drehung der Sondenanordnung (100, 200, 402) zu einer Drehung der ersten Ultraschallsonde (108) um die Achse (140, 350, 450) führt; und
Erzeugen (606) eines Ultraschallstrahls durch die erste Ultraschallsonde (108), der konfiguriert ist, um basierend auf der Drehung der Sondenanordnung (102, 200, 402) ein Zielvolumen im Ziel (150) zu durchqueren, wobei der Ultraschallstrahl (110) derart in eine schräge Richtung ausgerichtet ist, dass der Ultraschallstrahl (110) durch einen konischen Bereich (122) im Ziel (150) verläuft, wobei der Ultraschallstrahl (110) entlang der Oberfläche des Kegels verläuft,
**dadurch gekennzeichnet, dass** die Drehung der Sondenanordnung (102,200,402) eine 360°-Drehung der ersten Ultraschallsonde (108) um die Achse (140,350,450) ermöglicht.

14. Verfahren nach Anspruch 13, wobei der Sondenhalter (104, 300, 404) einen Durchgangskanal mit einem ersten Bereich (302) einschließt, der sich am proximalen Ende des Sondenhalters (104, 300, 404) befindet, wobei der erste Bereich (302) konfiguriert ist, um das distale Ende der Sondenanordnung (102, 200, 402) aufzunehmen.

15. Verfahren nach Anspruch 13, ferner umfassend:
Empfangen eines oder mehrerer Ultraschallstrahlen durch eine oder mehrere Ultraschallsonden (108), die durch die Wechselwirkung zwischen dem von der ersten Ultraschallsonde (108) erzeugten Ultraschallstrahl und einem oder mehreren Zielbereichen auf dem Zielvolumen erzeugt werden.

16. Verfahren nach Anspruch 13, wobei ein Aktuator (120) konfiguriert ist, um die Sondenanordnung (102, 200, 402) relativ zum Sondenhalter (104, 300, 404) zu drehen.

17. Verfahren nach Anspruch 16, ferner umfassend:
Übertragen eines ersten Steuersignals durch eine Steuerung (160) an den Aktuator (120), wobei das erste Steuersignal eine Drehgeschwindigkeit der Sondenanordnung (102, 200, 402) angibt.

18. Verfahren nach Anspruch 17, ferner umfassend:
Übertragen eines zweiten Steuersignals durch die Steuerung (160) an die Ultraschallsonde (108), wobei das zweite Steuersignal einen Zeitraum angibt, während dessen der Ultraschallstrahl erzeugt wird.

19. Verfahren nach Anspruch 13, wobei die erste Ultraschallsonde (108) eine eindimensionale Ultraschallsonde ist, die konfiguriert ist, um den Ultraschallstrahl entlang einer ersten Richtung auszurichten.

20. Verfahren nach Anspruch 13, wobei die erste Ultraschallsonde (108) eine zweidimensionale Ultraschallsonde ist, die konfiguriert ist, um den Ultraschallstrahl entlang einer ersten Richtung und einer zweiten Richtung auszurichten, wobei die erste Richtung und die zweite Richtung orthogonal sind.

## Revendications

1. Système d'inspection (100) pour détecter des défauts dans une cible (150), le système d'inspection comprenant :
un ensemble sonde (102, 200, 402) comprenant une première sonde ultrasonore (108) conçue pour générer un faisceau ultrasonore ; et
un support de sonde (104, 300, 404) comprenant :
une surface de contact externe (320) située au niveau d'une extrémité distale du support de sonde (300), la surface de contact externe (320) étant conçue pour s'accoupler de manière amovible à une cible (150),
le support de sonde (300) ayant un canal traversant ayant une première région (302) située au niveau d'une extrémité proximale (300a) du support de sonde (300), la première région (302) étant conçue pour recevoir une extrémité distale de l'ensemble sonde (102, 200, 402), dans lequel l'ensemble sonde (102, 200, 402) est conçu pour tourner par rapport au support de sonde (300) autour d'un axe (140, 350, 450) perpendiculaire à la surface de contact externe (320), la rotation de l'ensemble sonde (102, 200, 402) entraînant la rotation de la première sonde ultrasonore (108) autour de l'axe (140, 350, 450),
dans lequel le faisceau ultrasonore généré par la première sonde ultrasonore (108) est conçu pour traverser un volume cible (126) dans la cible (150) sur la base de la rotation de l'ensemble sonde (102, 200, 402), le faisceau ultrasonore (110) étant dirigé dans une direction oblique de sorte que le faisceau ultrasonore (110) traverse une région conique (122) dans la cible (150), le faisceau ultrasonore (110) traversant le long de la surface du cône,
**caractérisé en ce que** la rotation de l'ensemble sonde (102, 200, 402) permet une rotation de 360 ° de la première sonde ultrasonore (108) autour de l'axe (140, 350, 450).

2. Système d'inspection selon la revendication 1, comprenant en outre une ou plusieurs sondes ultrasonores (108) conçues pour recevoir un ou plusieurs faisceaux ultrasonores réfléchis, dans lequel le ou les faisceaux ultrasonores réfléchis sont générés par interaction entre le faisceau ultrasonore généré par la première sonde ultrasonore (108) et une ou plusieurs régions cibles situées sur le volume cible tracé par le premier faisceau ultrasonore.

3. Système d'inspection selon la revendication 2, dans lequel l'une ou plusieurs des régions cibles comportent une première région cible, une deuxième région cible et une troisième région cible situées dans un plan cible de la cible.

4. Système d'inspection selon la revendication 1, dans lequel le système d'inspection comporte un actionneur (120) conçu pour faire tourner l'ensemble sonde (102, 200, 402) par rapport au support de sonde (104, 300, 404).

5. Système d'inspection selon la revendication 4, comprenant en outre un dispositif de commande (160) comprenant un ou plusieurs processeurs et accouplé de manière opérationnelle à l'actionneur (120), le dispositif de commande (160) étant conçu pour transmettre un premier signal de commande à l'actionneur (120), dans lequel le premier signal de commande est indicatif d'une vitesse de rotation de l'ensemble sonde (102, 200, 402).

6. Système d'inspection selon la revendication 5, dans lequel le dispositif de commande (160) est accouplé de manière opérationnelle à la première sonde ultrasonore (108), le dispositif de commande (160) étant conçu pour transmettre un second signal de commande à la sonde ultrasonore (108), dans lequel le second signal de commande est indicatif d'une période de temps pendant laquelle le faisceau ultrasonore est généré.

7. Système d'inspection selon la revendication 6, dans lequel le premier signal de commande et le second signal de commande sont sur la base d'un emplacement d'une région cible prédéterminée dans la cible.

8. Système d'inspection selon la revendication 1, dans lequel la première sonde ultrasonore (108) est disposée sur un plan de sonde orienté selon un angle par rapport à la surface externe.

9. Système d'inspection selon la revendication 1, dans lequel la première sonde ultrasonore (108) est une sonde ultrasonore unidimensionnelle conçue pour diriger le faisceau ultrasonore le long d'une première direction.

10. Système d'inspection selon la revendication 1, dans lequel la première sonde ultrasonore (108) est une sonde ultrasonore bidimensionnelle conçue pour diriger le faisceau ultrasonore le long d'une première direction et d'une seconde direction, dans lequel la première direction et la seconde direction sont orthogonales.

11. Système d'inspection selon la revendication 1, dans lequel le canal traversant comporte une seconde région (304) située entre la première région (302) et la surface de contact externe (320),
dans lequel la première région (302) a une première longueur parallèle à l'axe et un premier diamètre orthogonal à l'axe, et la seconde région (304) a une seconde longueur parallèle à l'axe et un second diamètre orthogonal à l'axe, et
dans lequel le premier diamètre est plus grand que le second diamètre.

12. Système d'inspection selon la revendication 11, dans lequel la seconde région (304) est conçue pour recevoir un fluide, dans lequel le fluide est conçu pour accoupler le faisceau ultrasonore généré par la première sonde ultrasonore (108) à la cible.

13. Procédé comprenant :
le positionnement (602) d'une surface de contact externe (320) d'un support de sonde (104, 300, 404) sur une cible (150), dans lequel la surface de contact externe (320) est située au niveau d'une extrémité distale du support de sonde (104, 300, 404) ;
la rotation (604) d'un ensemble sonde (102, 200, 402) par rapport au support de sonde (104, 300, 404) autour d'un axe (140, 350, 450) perpendiculaire à la surface de contact externe (320), dans lequel l'ensemble sonde (102, 200, 402) comporte une première sonde ultrasonore (108), et dans lequel une extrémité distale de l'ensemble sonde (102, 200, 402) est accouplée à une extrémité proximale du support de sonde (104, 300, 404), la rotation de l'ensemble sonde (100, 200, 402) entraînant la rotation de la première sonde ultrasonore (108) autour de l'axe (140, 350, 450) ; et
la génération (606), par la première sonde ultrasonore (108), d'un faisceau ultrasonore conçu pour traverser un volume cible dans la cible (150) sur la base de la rotation de l'ensemble sonde (102, 200, 402), le faisceau ultrasonore (110) étant dirigé dans une direction oblique de sorte que le faisceau ultrasonore (110) traverse une région conique (122) dans la cible (150), le faisceau ultrasonore (110) traversant le long de la surface du cône,
**caractérisé en ce que** la rotation de l'ensemble sonde (102, 200, 402) permet une rotation de 360 ° de la première sonde ultrasonore (108) autour de l'axe (140, 350, 450).

14. Procédé selon la revendication 13 dans lequel le support de sonde (104, 300, 404) comporte un canal traversant comportant une première région (302) située au niveau de l'extrémité proximale du support de sonde (104, 300, 404), la première région (302) étant conçue pour recevoir l'extrémité distale de l'ensemble sonde (102, 200, 402).

15. Procédé selon la revendication 13, comprenant en outre :
la réception, par une ou plusieurs sondes ultrasonores (108), d'un ou plusieurs faisceaux ultrasonores générés par interaction entre le faisceau ultrasonore généré par la première sonde ultrasonore (108) et une ou plusieurs régions cibles situées sur le volume cible.

16. Procédé selon la revendication 13, dans lequel un actionneur (120) est conçu pour faire tourner l'ensemble sonde (102, 200, 402) par rapport au support de sonde (104, 300, 404).

17. Procédé selon la revendication 16, comprenant en outre :
la transmission, par un dispositif de commande (160), d'un premier signal de commande à l'actionneur (120), dans lequel le premier signal de commande est indicatif d'une vitesse de rotation de l'ensemble sonde (102, 200, 402).

18. Procédé selon la revendication 17, comprenant en outre :
la transmission, par le dispositif de commande (160), d'un second signal de commande à la sonde ultrasonore (108), dans lequel le second signal de commande est indicatif d'une période de temps pendant laquelle le faisceau ultrasonore est généré.

19. Procédé selon la revendication 13, dans lequel la première sonde ultrasonore (108) est une sonde ultrasonore unidimensionnelle conçue pour diriger le faisceau ultrasonore le long d'une première direction.

20. Procédé selon la revendication 13, dans lequel la première sonde ultrasonore (108) est une sonde ultrasonore bidimensionnelle conçue pour diriger le faisceau ultrasonore le long d'une première direction et d'une seconde direction, dans lequel la première direction et la seconde direction sont orthogonales.
